(19) Europäisches Patentamt
European Patent Office
Office européen des brevets

(11) **EP 1 796 900 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(51) Int Cl.:
***B32B 25/08*** *(2006.01)*        ***B29C 45/16*** *(2006.01)*
***C08L 53/02*** *(2006.01)*

(21) Anmeldenummer: **05796220.1**

(22) Anmeldetag: **28.09.2005**

(86) Internationale Anmeldenummer:
**PCT/EP2005/010504**

(87) Internationale Veröffentlichungsnummer:
**WO 2006/034860 (06.04.2006 Gazette 2006/14)**

(54) **VERBUNDKÖRPER AUS POLYACETAL UND THERMOPLASTISCHEM VULKANISAT-ELASTOMER**

COMPOSITE BODY MADE FROM POLYACETAL AND THERMOPLASTIC VULCANISED ELASTOMER

CORPS COMPOSITE EN POLYACETAL ET ELASTOMERE VULCANISAT THERMOPLASTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.09.2004   DE 102004047200**

(43) Veröffentlichungstag der Anmeldung:
**20.06.2007   Patentblatt 2007/25**

(73) Patentinhaber: **Ticona GmbH**
**65451 Kelsterbach (DE)**

(72) Erfinder:
• **PRIGANDT, Marco**
  **63796 Kahl am Main (DE)**
• **REIL, Frank**
  **64342 Seeheim-Jugenheim (DE)**

• **ZIEGLER, Ursula**
  **55130 Mainz (DE)**
• **AUMÜLLER, Werner**
  **91619 Unteraltenbernheim (DE)**
• **STENGLIN, Uwe**
  **91587 Adelshofen/Tauberzell (DE)**
• **ULMER, Bernhard**
  **97215 Uffenheim (DE)**

(74) Vertreter: **Zimmermann & Partner**
**Postfach 330 920**
**80069 München (DE)**

(56) Entgegenhaltungen:
**EP-A- 0 835 898        EP-A- 0 837 097**
**EP-A- 1 095 962        WO-A-00/20204**
**WO-A-94/25245          WO-A-99/29777**
**DE-C1- 4 439 766**

**Beschreibung**

Die Erfindung betrifft einen Verbundkörper aus Polyacetal und mindestens einem thermoplastischen Vulkanisat (TPV)-Elastomer ( = TPV) sowie ein Verfahren zu seiner Herstellung, wobei durch Modifizierung des TPV-Elastomers mit nichtolefinischen Thermoplast-Materialien es möglich wurde einen adhäsiven oder kohäsiven Verbund zwischen dem Polyacetal und dem TPV zu erhalten. Durch Verwendung spezieller Vernetzersysteme kann der Abbau des Polyacetals vermieden werden.

Der technische Werkstoff Polyacetal, d.h. Polyoxymethylen (POM), hat ausgezeichnete mechanische Eigenschaften und ist darüber hinaus im allgemeinen auch widerstandsfähig gegen alle üblichen Lösemittel und Kraftstoffe. Aufgrund der guten Festigkeit und Härte verbunden mit einer ausgezeichneten Rückstellelastizität finden Formteile aus Polyacetal in allen Bereichen des täglichen Lebens sehr häufig Anwendung für Schnappverbindungen, insbesondere Clips. Die ausgezeichneten Gleit-Reib-Eigenschaften begründen den Einsatz von POM für viele bewegliche Teile wie Getriebeteile, Umlenkrollen, Zahnräder oder Verstellhebel. Formteile aus POM werden auch sehr häufig im Automobilbau eingesetzt. Aufgrund der sehr guten mechanischen Beständigkeit und Resistenz gegen Chemikalien werden auch vielfältige Gehäuse und Tastaturen aus POM hergestellt.

POM weist jedoch bei Raumtemperatur einen niedrigen mechanischen Dämpfungsfaktor auf, was in einigen Anwendungsfällen den Einsatz von weichen Dämpfungselementen erforderlich macht. Beim Einbau von Formteilen aus POM ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bedienungssicherheit beispielsweise von Schaltelementen und Bedienungselementen aus POM, einschränken. Es werden andererseits auch immer öfter Kombinationen aus harten und weichen Werkstoffen eingesetzt, um die besonderen Eigenschaften dieser Werkstoffe miteinander zu kombinieren. Der harte Werkstoff soll dabei die Festigkeit der Bauteile bewirken, der weiche Werkstoff übernimmt aufgrund seiner elastischen Eigenschaften Funktionen zur Dichtung oder Vibrations- und Geräuschdämpfung oder bewirkt eine Veränderung der Oberflächenhaptik. Wichtig bei diesen Anwendungen ist eine ausreichende Haftung zwischen der harten und der weichen Komponente.

Bislang werden entweder Dichtungen und Dämpfungselemente separat bereitgestellt und üblicherweise in einem zusätzlichen Arbeitsschritt mechanisch verankert oder verklebt, was zusätzliche Arbeit und teilweise erhebliche Zusatzkosten verursacht.

Eine neuere und wirtschaftlichere Methode ist der Mehrkomponentenspritzguß. Hierbei wird z.B. eine zweite Komponente auf eine vorgeformte erste Komponente aufgespritzt. Die erreichbare Haftung zwischen den beiden Komponenten ist für dieses Verfahren von großer Bedeutung. Im Mehrkomponentenspritzguß kann diese Haftung zwar in formschlüssigen Verbindungen durch Anbringung von Hinterschnitten oft noch verbessert werden. Jedoch ist eine gute Grundhaftung durch chemische Affinität zwischen den ausgewählten Komponenten oft Voraussetzung für deren Einsatz.

Allgemein bekannt sind z.B. nach dem Mehrkomponentenspritzguß hergestellte Kombinationen aus Polypropylen und Polyolefinelastomeren oder Styrol-Olefin-Elastomeren, Polybutylenterephthalat mit Polyesterelastomeren oder Styrol-Olefin-Elastomeren. Auch Polyamide zeigen Haftung zu sehr vielen Weichkomponenten.

Bekannt sind auch Formteile aus Polyacetal mit direkt angeformten Funktionselementen, die unter Verwendung nicht vernetzter Kautschuke hergestellt wurden (DE-C 44 39 766). Die Haftfestigkeit derartiger Verbundkörper ist jedoch noch nicht zufriedenstellend.

Eine weitere Veröffentlichung betrifft ebensolche Verbundkörper, die aus u.a. einem Polyacetal, einem Kautschuk-Copolymerisat, einem verstärkenden Füllstoff, einem Vernetzer und gegebenenfalls weiteren üblichen Zuschlagstoffen bestehen (DE-A 196 41 904). Dabei wird zunächst die Kautschuk-Komponente, die in Abwesenheit eines Vernetzers hergestellt wurde, nach Zusatz eines Vernetzers durch Spritzguss mit einem vorgelegten Polyacetal-Formteil bei 130-170°C verbunden, um in einem weiteren Schritt bei 140-180°C durch Vulkanisation des Kautschuk-Copolymerisats den Polyacetal-Kautschuk-Verbundkörper auszubilden. Erst durch die Vulkanisation des Kautschukanteils wird eine besonders gute Haftung der Polymerkomponenten erreicht. Allerdings wird dieser zusätzliche Schritt wegen der erhöhten Vulkanisations-Temperaturen und -Zeiten nachteilig bewertet.

Aus DE-C-19845235 sind Verbundkörper aus Polyacetal und Styrol-Olefin-Elastomeren, die durch Zugabe von nicht-olefinischem Thermoplastmaterial modifiziert wurden, bekannt. Von Nachteil sind allerdings ihre relativ hohen Druckverformungsrestwerte in verschiedenen Anwendungstemperaturbereichen und ihre nicht zufriedenstellende Chemikalienbeständigkeit gegenüber aromatischen und aliphatischen Kohlenwasserstoffen, Fetten und Ölen. Es besteht aber beispielsweise ein Bedürfnis an durch Mehrkomponentenspritzgießtechnik herstellbaren Hart-/Weich-Bauteilen für den Automobilmotorraum, die neben geringeren Druckverformungsrestwerten in verschiedenen Anwendungstemperaturbereichen, eine höhere Temperaturbeständigkeit (niedrigeres Kriechverhalten) in Verbindung mit verbesserter Chemikalienbeständigkeit bieten.

Eine alternative Möglichkeit bei der Herstellung von Verbundkörpern bietet der Einsatz von haftenden Zwischenlagen. So ist z.B. aus EP 0 921 153 A1 bekannt, dass sich polare und nicht-polare Polymere durch den Einsatz spezifischer Blockpolymere als Verträglichkeitsvermittler aus einem funktionalisierten Polymeren und einem Polyamid mischen lassen. Die erhaltenen Polymermischungen können als adhäsiv wirkende Zwischenlage zur Herstellung von Verbundkörpern aus einem polaren und nicht-polaren thermoplastischen Polymer genutzt werden. Die Herstellung von Verbundkörpern aus einem polaren und nicht-polaren thermoplastischen Polymer gelingt gemäß EP 0 837 097 A1 auch mit Hilfe von Block-Copolymeren enthaltend ein chemisch modifiziertes Polyolefin und ein thermoplastisches Polyurethan, einen Copolyester oder ein Polyamid. Ein Verzicht auf die Verwendung aufwendiger Block-Copolymere bei der Herstellung von Verbundkörpern aus Polyayetalen und thermoplastischen Elastomeren wäre allerdings wünschenswert.

Aufgabe der vorliegenden Erfindung ist es daher, einen Verbundkörper aus Polyacetal und thermoplastischen Elastomeren zu schaffen, bei dem die genannten Nachteile und Einschränkungen nicht vorhanden sind.

Bei der Suche nach neuen Hart-/Weich-Verbindungen hat die bisherige Erfahrung gezeigt, dass die direkte Kombination von Polyacetal und TPV nicht möglich ist (Advanced Elastomer Systems, Rev. 06/2001 p.1; Santoprene® thermoplastic rubber 8211-55B100 TPV), da die herkömmlich eingesetzten Vernetzungsmittel für das TPV, wie z.B. Phenolharze oder Peroxide zum Abbau des Polyacetals führen.

Überraschend wurde nun gefunden, dass sich aus Polyacetal und einem durch nicht olefinisches Thermoplastmaterial modifizierten TPV ein adhäsiver Verbund mit den gewünschten Eigenschaften bei sehr guter Haftung erzielen lässt. Mit olefinischem Thermoplastmaterial modifiziertes TPV zeigt dagegen keine Haftung an Polyacetal.

Die Erfindung betrifft daher einen Verbundkörper aus mindestens einem Polyacetal und mindestens einem modifizierten TPV-Elastomeren, welches 10 bis 70 Gew.-% nicht-olefinisches Thermoplastmaterial, bezogen auf das Gewicht des modifizierten TPV-Elastomeren, und mindestens 1-30% eines Verträglichkeitsvermittlers enthält, sowie ein Verfahren zu dessen Herstellung, wobei entweder erst ein Formteil aus Polyacetal geformt wird, an das anschließend eine Beschichtung oder mindestens ein Formteil aus dem modifizierten TPV-Elastomeren angespritzt wird oder zuerst das modifizierte TPV-Elastomer vorgespritzt wird und dann eine Beschichtung oder mindestens ein Formteil aus dem Polyacetal angespritzt wird, wobei das Polyacetal adhäsiv oder kohäsiv mit dem modifizierten TPV-Elastomeren verbunden wird. Der Schälwiderstand des erfindungsgemäßen Verbundkörpers beträgt mindestens 0,5 N/mm. Das modifizierte TPV-Elastomere sollte erfindungsgemäß einen bevorzugten Druckverformungsrestwert besitzen, der bei 70°C nach 24 h gemäß der DIN ISO 815 < 65 % ist.

Der erfindungsgemäße Verbundkörper wird dabei durch ein Polyacetal-Formteil gebildet, das teilweise oder vollständig mit dem modifizierten TPV-Elastomeren beschichtet wurde oder an das ein oder mehrere Formteile, auch Funktionsteile genannt, aus dem modifizierten TPV-Elastomeren direkt angeformt wurden. Es kann sich dabei beispielsweise um ein flächiges Polyacetal-Formteil handeln, das auf einer Seite eine Schicht aus TPV-Elastomeren trägt. Beispiele hierfür sind rutschfeste Unterlagen, Griffmulden, Bedien- und Schaltelemente, mit Dichtungen oder Dämpfungselementen versehene Funktionsteile sowie Innen- und Außenverkleidungen von Zweirädern, Kraft-, Luft-, Schienen- und Wasserfahrzeugen, die durch das Polyacetal die erforderliche Formstabilität und durch die Elastomeren-Schicht die gewünschte Reibungseigenschaft, Dichtfunktion, Haptik oder Optik erhalten.

Der Verbundkörper kann aber auch aus einem oder mehreren Polyacetal-Formteilen beliebiger Gestalt bestehen, woran ein oder mehrere Formteile beliebiger Gestalt aus dem modifizierten TPV-Elastomeren direkt angeformt wurden. Der Ausdruck "direkt angeformt" soll im Rahmen der vorliegenden Erfindung so verstanden werden, daß die Funktionselemente direkt auf das Formteil aus Polyacetal, mit dem sie einen haftfesten Verbund eingehen sollen, aufgespritzt werden, insbesondere in einem Mehrkomponentenspritzgußverfahren.

Durch die Verwendung der mit nicht-olefinischem Thermoplastmaterial modifizierten TPV-Elastomeren können beispielsweise Dicht- oder Dämpfungselemente aus dem Elastomeren direkt an Formteile aus Polyacetal angeformt werden, ohne daß weitere Montageschritte erforderlich werden. Durch den Wegfall der bisher benötigten Verarbeitungsschritte zur Montage von Funktionselementen ist eine erhebliche Kosteneinsparung bei der Produktion der erfindungsgemäßen Verbundkörper zu erzielen.

Die Herstellung des Verbundkörpers erfolgt nach den allgemein bekannten Methoden und Verfahren. Vorteilhaft ist die Verwendung des Mehrkomponentenspritzgußverfahrens, wobei zunächst das Polyacetal im Spritzgußwerkzeug geformt, d.h. vorgespritzt wird und anschließend eine Beschichtung oder ein Formteil aus dem modifizierten TPV-Elastomeren auf das Polyacetal-Formteil gespritzt wird.

Falls es die geometrischen Verhältnisse des Formteils erlauben, kann der Verbundkörper durch das Mehrkomponentenverfahren auch in umgekehrter Reihenfolge hergestellt werden, das heißt, dass zuerst ein Formteil aus dem TPV-Elastomeren vorgespritzt wird und dann eine Beschichtung aus dem Polyacetal aufgespritzt oder mindestens ein Formteil aus dem Polyacetal angespritzt wird.

Bei der Fertigung des Polyacetal-Formteils liegt die Massetemperatur dabei im üblichen Bereich, d.h. für die unten beschriebenen Polyacetale im Bereich von etwa 180 bis 240 ° C, vorzugsweise bei 190 bis 230°C. Das Werkzeug selbst wird auf eine Temperatur im Bereich von 20 bis 140°C temperiert. Für de Form-Präzision und Dimensionsstabilität des harten Bauteilkörpers aus dem teilkristallinen Werkstoff Polyacetal ist eine Werkzeugtemperatur im oberen Temperaturbereich vorteilhaft.

Sobald die Kavität im Werkzeug vollständig gefüllt und der Nachdruck nicht weiter wirksam ist (Siegelpunkt), kann das Polyacetal-Formteil fertig ausgekühlt und als erster Teil des Verbundkörpers (Vorspritzling) entformt werden.

In einem zweiten, nachgeschalteten separaten Spritzgießschritt wird dann z.B. dieser Vorspritzling in ein anderes Werkzeug mit einer ausgesparten Kavität eingelegt bzw. umgesetzt und das Material mit der geringeren Härte, d.h. das modifizierte TPV-Elastomer, in das Werkzeug eingespritzt und dabei auf das Polyacetal-Formteil aufgespritzt. Dieses Verfahren ist als Einlege- oder Umsetzverfahren bekannt. Für die nachfolgend erreichbare Haftung ist es besonders vorteilhaft, wenn das vorgespritzte Polyacetal-Formteil auf eine Temperatur im Bereich von 80°C bis knapp unterden Schmelzpunkt vorgewärmt wird. Damit wird ein Anschmelzen der Oberfläche durch das aufgespritzte TPV-Elastomer und dessen Eindringen in die Grenzschicht erleichtert.

Das vorgespritzte Polyacetal-Formteil kann aber auch nur teilentformt werden und zusammen mit einem Teil des ursprünglichen Werkzeugs (z.B. der Angußplatte, der Ausstoßerseite oder nur einer Indexplatte) in eine weitere größere Kavität bewegt werden.

Eine andere Möglichkeit besteht darin, das modifizierte TPV-Elastomer ohne Zwischenöffnen der Maschine und Weitertransport des Vorspritzlings aus Polyacetal in das gleiche Werkzeug einzuspritzen. Dabei sind die für die Elastomer-Komponente vorgesehenen Werkzeughohlräume beim Einspritzen der Polyacetal-Komponente zunächst durch verschiebbare Einsätze oder Kerne verschlossen und werden erst zum Einspritzen der Elastomer-Komponente geöffnet (Schiebertechnik). Diese Verfahrensvariante ist auch zum Erzielen einer guten Haftung besonders vorteilhaft, da bereits nach kurzer Kühlzeit die Schmelze des TPV-Elastomeren auf einen noch heißen Vorspritzling trifft.

Gegebenenfalls können im Mehrkomponentenspritzgußverfahren weitere Formteile aus Polyacetal und dem modifizierten TPV-Elastomeren gleichzeitig oder in aufeinander folgenden Schritten aufgespritzt werden.

Beim Aufspritzen des modifizierten TPV-Elastomeren ist es für eine gute Haftung vorteilhaft, die Einstellungen für die Massetemperatur sowie den Einspritz- und den Nachdruck möglichst hoch zu wählen. Im allgemeinen liegt die Massetemperatur des TPV-Elastomeren im Bereich von 170 bis 270 ° C und wird nach oben durch seine Zersetzung begrenzt. Die Werte für die Einspritzgeschwindigkeit sowie für den Einspritz- und Nachdruck sind maschinen- und formteilabhängig und sind den jeweiligen Gegebenheiten anzupassen.

Nach allen Verfahrensvarianten, mit oder ohne Entformung des Vorspritzlings wird das Werkzeug im zweiten Schritt auf eine Temperatur im Bereich von 20°C bis 140°C temperiert. Je nach Konstruktion der Teile kann es sinnvoll sein, die Werkzeugtemperatur etwas abzusenken, um somit die Entformbarkeit und die Zykluszeiten zu optimieren. Nach dem Auskühlen der Teile wird der Verbundkörper entformt. Hierbei ist es bei der Werkzeugkonstruktion wichtig, die Auswerfer an geeigneter Stelle anzubringen, um eine Belastung der Werkstoff-Verbundnaht zu minimieren. Auch eine ausreichende Entlüftung der Kavität im Nahtbereich ist bei der Werkzeugkonstruktion vorzusehen, um eine Behinderung der Verbindung zwischen den beiden Komponenten durch eingeschlossene Luft möglichst gering zu halten. Einen ähnlichen Einfluß übt auch die Art der Werkzeugwandrauhigkeit aus. Für die Ausbildung einer guten Haftung ist eine glatte Oberfläche an der Stelle der Verbundnaht vorteilhaft, da dann weniger Luft in der Oberfläche eingeschlossen wird.

Das erfindungsgemäß eingesetzte Polyacetal ist aus der Gruppe der bekannten Polyoxymethylene (POM), wie sie beispielsweise in der DE-A 29 47 490 beschrieben sind. Gerade die Herstellung von oben beschriebenen Verbundkörpern mit solchen Polyoxymethylenen ist bisher noch nicht gelungen. Bei den Polyoxymethylenen handelt sich im allgemeinen um unverzweigte lineare Polymere, die in der Regel mindestens 80 Mol-%, vorzugsweise mindestens 90 Mol-%, Oxymethyleneinheiten (-$CH_2O$-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere. Homopolymere des Formaldehyds oder Trioxans sind solche Polymere, deren Hydroxylendgruppen in bekannter Weise, z.B. durch Veresterung oder Veretherung, chemisch gegen Abbau stabilisiert sind.

Copolymere sind Polymere aus Formaldehyd oder seinen cyclischen Oligomeren, insbesondere Trioxan, und cyclischen Ethern, cyclischen Acetalen und/oder linearen Polyacetalen.

Als Comonomere kommen einerseits cyclische Ether mit 3, 4 oder 5, vorzugsweise jedoch 3 Ringgliedern, andererseits von Trioxan verschiedene cyclische Acetale mit 5 bis 11, vorzugsweise 5, 6, 7 oder 8 Ringgliedern sowie lineare Polyacetale in Frage, jeweils in Mengen von 0,1 bis 20 Mol-%, vorzugsweise 0,5 bis 10 Mol-%.

Die eingesetzten Polyacetal-Polymere haben im allgemeinen einen Schmelzindex (MFR-Wert 190/2,16) von 0,5 bis 75 g/10 min (ISO 1133).

Es können auch modifizierte POM-Typen eingesetzt werden. Zu diesen modifizierten Typen zählen beispielsweise Blends aus POM mit TPE-U (Thermoplastisches Polyurethan-Elastomer), mit MBS (Methylmethacrylat/Butadien/Styrol-core-shell-Elastomer), mit Methylmethacrylat/Acrylat-core-shell-Elastomer, mit PC (Polycarbonat), mit SAN (Styrol/Acrylnitril-Copolymer) oder mit ASA (Acrylat/Styrol/Acrylnitril Copolymer-Compound).

Bei den erfindungsgemäß eingesetzten modifizierten TPV-Elastomeren handelt es sich um Compounds mit einer Härte von 30-90 Shore A (bestimmt nach DIN 53505, entspricht ISO 868)), enthaltend die Komponenten:

a) 2-75 Gew.-%, bevorzugt 5-75 Gew.-% besonders bevorzugt 20-50 Gew.-% eines ganz oder teilweise vernetzten Ethylen-Propylen-Dien-Kautschuks (EPDM), in 1-50 Gew.-%, bevorzugt 3-50 Gew.-%, besonders bevorzugt 10-30 Gew.-% einer polyolefinischen Matrix, beispielsweise aus gegebenenfalls funktionalisiertem Polyethylen (PE), gegebenenfalls funktionalisiertem Polypropylen (PP) und/oder deren Copolymeren, vorzugsweise Polypropylen, bei Zusatz von 0,05-10 Gew.-%, bevorzugt 0,1 bis 5 Gew.-% Stabilisatoren, vorzugsweise phenolische Antioxidantien, und/oder Vernetzungshilfen, bevorzugt Azoverbindungen, Maleimide, Selen, Tellur, Schwefel, Schwefelverbindungen, insbesondere Thioverbingungen und besonders bevorzugt Peroxide, insbesondere Alkyl- oder Arylperoxide wie z.B. Dicumylperoxid, 2,5-Dimethyl-2,5-Di(tert.-butylperoxyl)hexan oder Di-tert.-butylperoxid. Die Komponente a) kann gegebenenfalls zusätzlich weitere Zusatzstoffe, insbesondere Weichmacher und Füllstoffe enthalten.

b) 1-30 Gew.-% mindestens eines Verträglichkeitsvermittlers wie gegebenenfalls funktionalisiertes Styrol-Olefin-Blockcopolymer, Methacrylat-Butadien-Styrol (MBS), MABS (Methyl-Methacrylat-Acrylnitril-Butadien-Styrol), funktionalisiertes EPDM bzw. Ethylen-Propylen-Kautschuk (EPM) und/oder funktionalisierte Polyolefine; und

c) 10-70 Gew.-% eines nicht olefinischen Thermoplastmaterials.
Das TPV-Elastomer kann darüber hinaus

d) gegebenenfalls bis zu 50 Gew.-% Weichmacheröl (z.B. paraffinische Mineralöle, synthetische Öle, Esterweichmacher, naphthenische Öle, halbsynthetische Öle, Siliconöle etc., vorzugsweise paraffinische Mineralöle), und/oder bis zu 50 Gew.-% organische und/oder anorganische Füllstoffe bzw. Verstärkungsstoffe (z.B. Kreide, Talkum, Glaskugeln, Glasfasern, Kieselsäure, Nanopartikel wie z.B. Schichtsilikate o.ä., Kaolin, Wollastonit, Bentonit, Magnesium- und/oder Aluminiumhydroxid etc., vorzugsweise Kreide); und/oder

e) Additive, wie z.B. Antioxidantien, Lichtschutzmittel, Nukleierungsmittel, Entformungshilfen, interne oder externe Gleitmittel, Pigmente, Ruß, halogenfreie und/oder -haltige Flammschutzmittel, optische Aufheller, Kohlenwasserstoff- und/oder Epoxidharze, Antistatika, Mikrobizide, Fungizide etc., gängige Vernetzungsmittel wie beispielsweise Peroxide, Phenolharze und Schwefel oder ähnliches, vorzugsweise Peroxide, sowie gängige Vernetzungsverstärker wie beispielsweise Silane, Guanidine, Schwefelverbindungen, wie z.B. Cadmium- , Kupfer-, Blei-, Zink- und Tellur-Selenschwefelverbindungen, insbesondere -Dithiocarbamate, -Thiurame oder Xanthate, Thioharnstoffe, Triallylisocyanurat, Triallylcyanurat, Trimethylolpropantrimethacrylat, Alpha-Methylstyrol oder ähnliche, in den allgemein üblichen Mengen

enthalten.
Die gemachten Gew.-% -Angaben beziehen sich auf das Gesamtgewicht des TPV-Elastomeren (Compound).
Die unter a) und b) genannten Polyolefine und Coploymeren sind gegebenenfalls durch Gruppen oder Verbindungen funktionalisiert, die aus der Gruppe der Carbonylgruppen- und/oder Carboxylgruppen -haltigen Verbindungen, wie z.B. Maleinsäure, deren Derivate, wie Maleimid und/oder Maleinsäureanhydrid (MAH), Acrylsäure, Acrylate und/oder deren Derivate, insbesondere GMA (Glycidylmethacrylat), der Epoxygruppen-haltigen Verbindungen, wie z.B. Glycidylmethacrylat oder Glycidylethacrylat, der Amino- oder Iminogruppen, der Amidgruppen, der Metallcarboxylatgruppen, der Carbonatgruppen, der Nitrilgruppen, der Ethergruppen, der Estergruppen, der Urethangruppen, der Cyanatgruppen, der Isocyanatgruppen, der Cyanuratgruppen, der Isocyanuratgruppen und/oder der Hydroxygruppen, ausgewählt sein können. Es werden unter funktionalisierten Polyolefinen auch Mischungen mit anderen polaren Werkstoffen wie PP/ABS-Blends, PP-/PA-Blends oder PE/PMMA-Blends verstanden (mit ABS = Acrylnitril-Butadiensytyrol-Copolymer, PMMA = Polymethylmethacrylat).
Für den unter a) genannten EPDM-Kautschuk kann grundsätzlich jedes beliebige Dien eingesetzt werden. Als Dien-Monomere finden vorwiegend cis,cis-1,5-Cyclooctadien, exo-Dicyclopentadien, endo-Dicyclopentadien, 1,4-Hexadien und 5-Ethyliden-2-norbornen Verwendung. 5-Ethyliden-2-norbornen ist bevorzugt.
Bevorzugt werden als Komponente a) vernetzte, insbesondere peroxidisch vernetzte EPDM / Polyolefine eingesetzt, wobei die Komponente a) selbst bevorzugt keinen Rückstand an unumgesetztem Vernetzer mehr enthält oder zumindest nahezu frei von Vernetzern ist, wobei darunter ein Vernetzerrestgehalt von unter 0,1 Gew.-%, bevorzugt von unter 0,5 Gew.-%, besonders bevorzugt von unter 0,01 Gew.-% zu verstehen ist. Dies kann z.B. dadurch erreicht werden, dass während der Compoundierung des TPV-Elastomeren der Vernetzer aufgebraucht oder abgebaut wird. Dazu wird der Vernetzer bevorzugt in geringen Mengen zwischen 0,01-5 Gew.-%, besonders bevorzugt zwischen 0,1 und 2 Gew.-% bezogen auf das Gewicht des TPV-Elastomeren eingesetzt.
Das unter c) genannte nicht olefinische Thermoplastmaterial wird ausgewählt aus der Gruppe: thermoplastische Polyesterurethan-Elastomere, thermoplastische Polyetherurethan-Elastomere, thermoplastische Polyester beispielsweise Polyethylenterephthalat und/oder Polybutylenterephthalat, thermoplastische Polyesterester-Elastomere, thermoplastische Polyetherester-Elastomere, thermoplastische Polyetheramid-Elastomere, thermoplastische Polyamide, thermoplastische Polycarbonate, thermoplastische Polyacrylate, Acrylatkautschuke, Styrol-Acryl-Nitril/Acrylatkautschuke (ASA). Es können auch Mischungen der genannten Materialien eingesetzt werden.
Komponente a) wird auch als TPV-Masterbatch eingesetzt, worunter im allgemeinen ein dynamisch, vernetztes Vorcompound zu verstehen ist, enthaltend bezogen auf den TPV-Masterbatch (Vorcompound)

> 10-75 Gew.-%, vorzugsweise 20-40 Gew.-%, <u>E</u>thylen-<u>P</u>ropylen-<u>D</u>ien-Kautschuk (EPDM)
> 5-50 Gew.-%, vorzugsweise 5-20 Gew.-%, Polyolefin, vorzugsweise Polypropylen (PP),
> 0-70 Gew.-%, vorzugsweise 35-60 Gew.-%, Weichmacheröl, insbesondere paraffinisches Mineralöl,
> 0-50 Gew.-% organische und/oder anorganische Füllstoffe, vorzugsweise Kreide oder Bariumsulfat,
> 0,1-10 Gew.-%, vorzugsweise 0,2-5 Gew.-% Stabilisatoren, vorzugsweise phenolische Antioxidantien, und/oder Vernetzungshilfen, vorzugsweise Peroxide.

Das TPV-Masterbatch (Komponente a) geht bevorzugt mit einem Gewichtsanteil von 20-89 Gew.-%, besonders bevorzugt von 30-70 Gew.-%, bezogen auf das Gesamtgewicht des TPV-Elastomeren, in das TPV-Elastomere ein.

Für die Beispiele wurde ein TPV-Masterbatch aus einem peroxidisch vernetzten EPDM/PP-Compound) verwendet.

Geeignete Weichmacheröle, anorganische Füllstoffe, Stabilisatoren und Vernetzungshilfen für den TPV-Masterbatch sind die oben genannten.

Die Herstellung des Compounds erfolgt nach dem gängigen Compoundierverfahren mittels eines gleichläufigen Zweischneckenkneters (ZSK).

Durch Variation der Zusammensetzung des TPV-Masterbatches sowie der Anteile der Komponenten a)-e) ist es möglich, modifizierte TPV-Elastomere mit unterschiedlichen Eigenschaften herzustellen.

Die erfindungsgemäßen modifizierten TPV-Compounds weisen eine Härte im Bereich von 30 bis 90 Shore A, vorzugsweise 40 bis 80 Shore A, auf. Diese Härte kann durch die Anteile des Weichmachers und der thermoplastischen Komponente je nach Bedarf eingestellt werden.

Im allgemeinen ist es möglich, für den Thermoplastanteil im TPV-Elastomeren olefinische Thermoplaste wie Polyethylen, Polypropylen und Polyolefinelastomere, wahlweise auch talkumverstärkt oder mit Glasfaser gefüllt, zu verwenden. Wie aber die Versuche mit einem solchen TPV-Elastomeren, das mit olefinischem Thermoplastmaterial modifiziert ist, zeigen (siehe Vergleichsversuch PTS-UNIPRENE-7100-55*9000), weisen derartige TPV-Elastomer-Compounds keine Haftung an Polyacetal auf.

Erfindungsgemäß wird daher das TPV-Elastomer durch Compoundierung mit nicht-olefinischem Thermoplastmaterial modifiziert.

Im allgemeinen kann sowohl das Polyacetal als auch das modifizierte TPV-Elastomer-Compound übliche Zusatzstoffe wie Stabilisatoren, Nukleierungsmittel, Entformungsmittel, Gleitmittel, Füll- und Verstärkungsstoffe, Pigmente, Ruß, Licht- und Flammschutzmittel, Antistatika, Weichmacher oder optische Aufheller wie obengenannt enthalten. Die Zusatzstoffe liegen in allgemein üblichen Mengen vor.

Neben dem eingangs erwähnten Anwendungsgebiet im Automobilmotorraum finden die Verbundkörper gemäß der Erfindung auch Verwendung als Verbindungselemente in Form von Fittings, Kupplungen, Rollen, Lagern, als Funktionsteile mit integrierten Dicht- und/oder Dämpfungseigenschaften sowie als rutschfeste und grifffreundliche Elemente. Hierzu zählen auch Gehäuse im Automobilbau wie Türschloßgehäuse, Fensterhebergehäuse, Schiebedachdichtelemente und ähnliche, ferner Befestigungselemente mit integrierter Abdichtung wie Clipse mit Dichtringen oder -scheiben, Zierleisten mit integrierter Dichtlippe, Abdichtungselemente zum Ausgleich von Dehnungsfugen, Befestigungselemente mit guten Dämpfungseigenschaften, z.B. Clipse mit schwingungs- und geräuschdämpfenden Kernen, Getriebeteile wie Zahnräder mit Dämpfungselementen, Zahnradgetriebe mit integrierten flexiblen Kupplungen, rutschfeste und grifffreundliche Elemente wie Schalthebel oder -knöpfe oder Griff flächen an Elektrogeräten oder Schreibstiften sowie Kettenglieder mit elastischer Oberfläche.

Beispiele

Bei den aufgeführten THERMOPRENE-Typen (modifiziertes TPV), UNIPRENE und THERMOFLEX (Vergleichsbeispiele) handelt es sich um Handelsprodukte der Firma PTS-Plastic Technologie Service GmbH (Adelshofen, Bundesrepublik Deutschland). Bei den aufgeführten HOSTAFORM-Typen (Polyacetal) handelt es sich um Handelsprodukte der Ticona GmbH, (Kelsterbach, Bundesrepublik Deutschland).

Verwendete Polyacetale

HOSTAFORM® C 9021
Polyoxymethylen-Copolymerisat aus Trioxan und ca. 2 Gew.-% Ethylenoxid.
Schmelzindex MFR 190/2,16 (ISO 1133): 9 g/10 min
Modifizierung : Keine
HOSTAFORM® S9064

Polyoxymethylen-Copolymerisat aus Trioxan und ca. 2 Gew.-% Ethylenoxid, Schmelzindex MFR 190/2,16 (ISO 1133): 9 g/10 min

Modifizierung : 20 Gew.-% teilaromatisches Polyester-TPE-U

HOSTAFORM® S9244

Polyoxymethylen-Copolymerisat aus Trioxan und ca. 2 Gew.-% Ethylenoxid.

Schmelzindex MFR 190/2,16 (ISO 1133): 9 g/10 min

Modifizierung: 25 Gew.-% MBS core shell-Modifikator

Verwendete modifizierte TPV-Elastomere

PTS-THERMOPRENE-85A10*9007: Härte 85 Shore A, Dichte 1,09/cm$^3$ Compound aus TPV-Masterbatch (EPDM-X+/PP) (Herstellung s.o.), 40% Anteile an thermoplastischem Polyetheresterelastomer (TPE-E), Härte 40 Shore D, z.B. Handelsprodukte mit der Bezeichnung ARNITEL (DSM) oder HYTREL (Du PONT), 10% MBS (Methacrylat-Butadien-Styrol) core shell Modifikator, 15% anorganischer Füllstoff (CaCO$_3$) sowie Additive.

PTS-THERMOPRENE-75A10*9007: Härte 75 Shore A, Dichte 1,08 g/cm$^3$ Compound aus TPV-Masterbatch (EPDM-X+/PP), 40% Anteile an thermoplastischem Polyetheresterelastomer , Härte 25 Shore D, z.B. Handelsprodukte mit der Bezeichnung ARNITEL (DSM) oder HYTREL (Du PONT), 10% MBS (Methacrylat-Butadien-Styrol) core shell Modifikator, 15% anorganischer Füllstoff (CaCO$_3$), sowie Additive.

PTS-THERMOPRENE-70A10*9000: Härte 70 Shore A, Dichte 1,05 g/cm$^3$ Compound aus TPV-Masterbatch (EPDM-X+/PP), 35 % Anteile an thermoplastischem Polyetheresterelastomer Härte 25 Shore D, z.B. Handelsprodukte mit der Bezeichnung ARNITEL (DSM) oder HYTREL (Du PONT), ca 10 % MBS (Methacrylat-Butadien-Styrol) core shell Modifikator, 3 % teilweise funktionalisiertes HSBC (hydriertes Styrol-Olefin-Block-Copolymer), 5 % Weichmacheröl, 10 % anorganischer Füllstoff (CaCO$_3$), sowie Additive.

PTS-THERMOPRENE-60A10*9000: Härte 60 Shore A, Dichte 1,04 g/cm$^3$ Compound aus TPV-Masterbatch (EPDM-X+/PP), 25% Anteile an thermoplastischem Polyetheresterelastomer Härte 25 Shore D, z.B. Handelsprodukte mit der Bezeichnung ARNITEL (DSM) oder HYTREL (Du PONT), 5% MBS (Methacrylat-Butadien-Styrol) core shell Modifikator, 10% teilweise funktionalisiertes HSBC (hydriertes Styrol-Olefin-Block-Copolymer), 20% Weichmacheröl, 10% anorganischer Füllstoff (CaCO$_3$), sowie Additive.

PTS-THERMOPRENE-55A10*9000: Härte 55 Shore A, Dichte 1,05 g/cm$^3$ Compound aus TPV-Masterbatch (EPDM-X+/PP), 25 % Anteile an thermoplastischem Polyetheresterelastomer Härte 25 Shore D, z.B. Handelsprodukte mit der Bezeichnung ARNITEL (DSM) oder HYTREL (Du PONT), ca 10 % MBS (Methacrylat-Butadien-Styrol) core shell Modifikator, 10% teilweise funktionalisiertes HSBC (hydriertes Styrol-Olefin-Block-Copolymer), 20% Weichmacheröl, 10 % anorganischer Füllstoff (CaCO$_3$) sowie Additive.

PTS-THERMOPRENE-40A10*9007: Härte 40 Shore A, Dichte 1,00 g/cm$^3$ Compound aus TPV-Masterbatch (EPDM-X+/PP), 20% Anteile an thermoplastischem Polyetheresterelastomer Härte 25 Shore D, z.B. Handelsprodukte mit der Bezeichnung ARNITEL (DSM) oder HYTREL (Du PONT), 15% teilweise funktionalisiertes HSBC (hydriertes Styrol-Olefin-Block-Copolymer), 30% Weichmacheröl, 10% anorganischer Füllstoff (CaCO$_3$), sowie Additive.

PTS-THERMOPRENE-75A66*800: Härte 75 Shore A, Dichte 1,14 g/cm$^3$ Compound aus TPV-Masterbatch (EPDM-X+/PP), 10 % Anteile an Polyamid 6, 15 % teilweise funktionalisiertes HSBC (hydriertes Styrol-Olefin-Block-Copolymer), 25 % anorganischer Füllstoff (CaCO$_3$), sowie Additive.

PTS-THERMOPRENE-65A22*807: Härte 63 Shore A, Dichte 1,05 g/cm$^3$ Compound aus TPV-Masterbatch (EPDM-X+/PP), 40 % Anteile an thermoplastischem Polyesterurethan (TPU), Härte 85 Shore A, z.B. Handelsprodukte mit dem Namen DESMOPAN (Fa. Bayer) oder ELASTOLLAN (Fa. Elastogran), 10 % MBS (Methacrylat-Butadien-Styrol) core shell Modifikator, 10 % anorganischer Füllstoff (CaCO$_3$), sowie Additive.

PTS-THERMOPRENE-75A20*9000: Härte 73 Shore A, Dichte 1,08 g/cm$^3$ Compound aus TPV-Masterbatch (EPDM-X+/PP), 40 % Anteile an thermoplastischem Polyetherurethan (TPU), Härte 85 Shore A, z.B. Handelsprodukte mit dem Namen DESMOPAN (Fa. Bayer) oder ELASTOLLAN (Fa. Elastogran), 10 % MBS (Methacrylat-Butadien-Styrol) core shell Modifikator, 10 % anorganischer Füllstoff (CaCO$_3$), sowie Additive.

PTS-THERMOPRENE 65A60*807: Härte 67 Shore A, Dichte 1,03 g/cm$^3$ Compound aus TPV-Masterbatch (EPDM-X+/PP), 40 % Anteile an thermoplastischem Polyetherblockamid (PEBA), Härte 25 Shore D, z.B. Handelsprodukte mit dem Namen PEBAX (Fa. Atofina), 10 % MBS (Methacrylat-Butadien-Styrol) core shell Modifikator, 10 % anorganischer Füllstoff (CaCO$_3$), sowie Additive.

Vergleichsbeispiele

PTS-UNIPRENE-7100-55*9000: Härte 61 Shore A, Dichte 0,93 g/cm$^3$

Compound aus TPV-Masterbatch, 7 % Anteile an thermoplastischem Polyolefin (PP), sowie Additive.

PTS-THERMOFLEX-VP/S3005/121*9007 (= Mischung nach DE 19845235C2):

Härte 70 Shore A, Dichte 1,17 g/cm$^3$

Compound aus hochmolekularem funktionalisiertem und nicht funktionalisiertem SEBS-Blockcopolymer, 15 % Weichmacheröl, 40% Anteile an thermoplastischem Polyetheresterelastomer (TPE-E), 20 % anorganischer Füllstoff (CaCO$_3$), sowie Additive.

Die Herstellung der Verbundkörper erfolgte unter den in Tabelle 1 genannten Bedingungen.

Tabelle 1: Spritzgießparameter für die Probekörperherstellung

| Material 1. Komponente (Polyacetal) HOSTAFORM C9021, S9064, S9244 | | | Material 2. Komponente: PTS-THERMOPRENE, UNIPRENE, THERMOFLEX | |
|---|---|---|---|---|
| Vortrocknungstemperatur: | 80 [°C] | | Vortrocknungstemperatur: | 80[°C] |
| Vortrocknungsdauer: | 3 [h] | | Vortrocknungsdauer: | 2 [h] |
| Parameter | | | Parameter | |
| Werkzeugtemperatur: | 70 [°C] | | Werkzeugtemperatur: | 20-40 [°C] |
| | | | Heißkanalverteiler: | 200-250 [°C] |
| | | | Heißkanalpatrone: | 200-250 [°C] |
| Heizzone 5 (Düse) : | 200 [°C] | | Heizzone 5 (Düse): | 200-250 [°C] |
| Heizzone 4: | 200 [°C] | | Heizzone 4: | 190-240 [°C] |
| Heizzone 3: | 200 [°C] | | Heizzone 3: | 190-240 [°C] |
| Heizzone 2: | 200 [°C] | | Heizzone 2: | 190-240 [°C] |
| Heizzone 1 (Trichter) : | 190 [°C] | | Heizzone 1 (Trichter): | 190-240 [°C] |
| Einspritzdruck : 1100[bar] | 900-1000 [bar] | | Einspritzdruck: | 350- |
| Einspritzgeschw: 100[cm$^3$/s] | 40-60 [cm$^3$/s] | | Einspritzgeschw.: | 50- |
| Einspritzzeit (Istwert) : | 1,7-2,1 [s] | | Einspritzzeit | (Istwert):0,3-1,0[s] |
| Umschaltpunkt : | 4-6 [cm$^3$] | | Umschaltpunkt: | 2-6 [cm$^3$] |
| Nachdruck 1 : | 750 [bar] | | Nachdruck 1 : | 0-600 [bar] |
| Nachdruckzeit 1 : | 3-5 [s] | | Nachdruckzeit 1: | 0-4 [s] |
| Restkühlzeit: | 6-10 [s] | | Restkühlzeit: | 15-35 [s] |
| Staudruck: | 70 [bar] | | Staudruck: | 20 [bar] |
| Dekompression: | 4 [cm$^3$] | | Dekompression: | 2 [cm$^3$] |
| Schneckendrehzahl: | 25 [min$^{-1}$] | | Schneckendrehzahl: | 15 [min$^{-1}$] |

Meßverfahren zur Ermittlung der Verbundfestigkeit zwischen Hart-und Weichkomponente

Für die Beurteilung der Haftung wurde ein Schälprüfkörper verwendet. Diese Prüfkörper wurden auf einer Mehrkomponenten-Spritzgussmaschine mit einer Schließkraft von 1000 kN hergestellt(Typ Arburg Allrounder, 420 V 1000-350/150, Hersteller Fa. Arburg, D72290 Loßburg).

Die mittige Anspritzung der Weichkomponente erfolgt durch eine Bohrung in der Hartkomponente. Dadurch sind symmetrische Fließwege gegeben. Die Herstellung des Probekörpers erfolgt mit einem 2K-Werkzeug nach dem Kernrückzugsverfahren, um optimale Bedingungen für die Verbundfestigkeit zu schaffen.

Die Geometrie des Prüfkörpers ist ein Rahmen mit der Dimension 130x100x3mm aus einem Polyacetal (Hartkomponente), welcher mit der modifizierten TPV-Weichkomponente flächig überspritzt wird. Bei der Weichkomponente handelt es sich um eine 2mm dicke Lippe mit einer Länge von 115mm und einer Breite von 35mm.

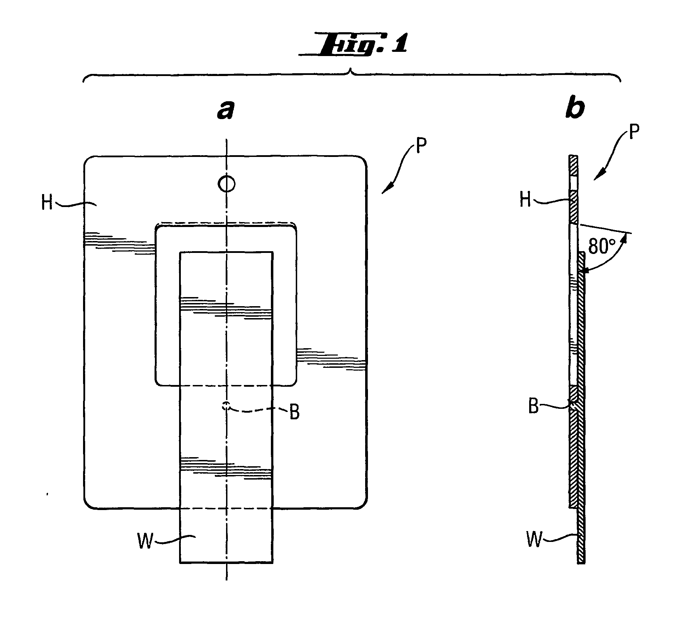

Figur 1a, b zeigt eine Vorderansicht und eine Seitenansicht des Prüfkörpers P. Die den Rahmen bildende Hartkomponente ist mit H, die Lippe aus der Weichkomponente mit W bezeichnet.

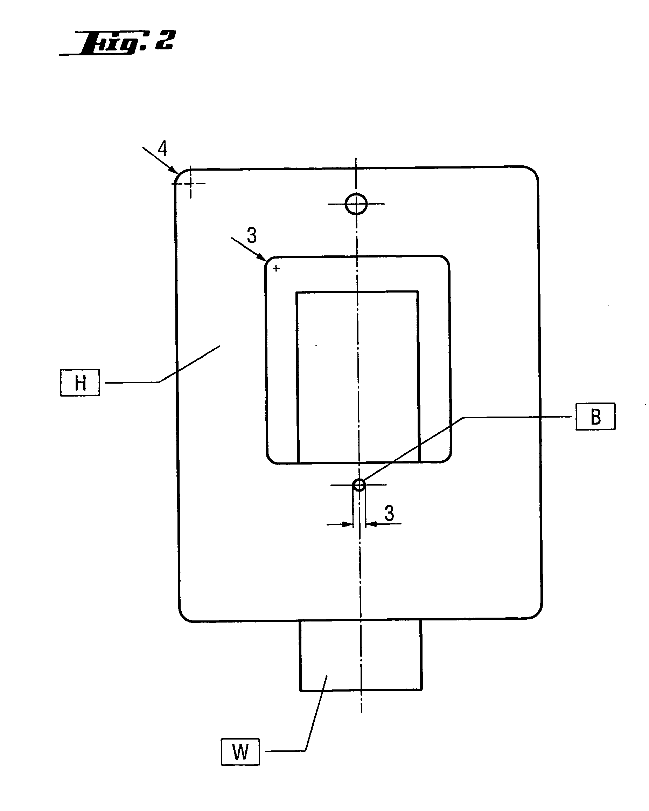

Figur 2 zeigt eine Rückansicht, wobei zusätzlich die mittige Bohrung B in der Hartkomponente H sichtbar ist.

Die grundsätzliche Prüfung der Verbundfestigkeit zwischen Hart- und Weichkomponente erfolgt in Anlehnung an ein genormtes Prüfverfahren, den Rollenschälversuch nach DIN EN 1464. Diese Prüfmethode beschreibt die "Bestimmung des Schälwiderstandes von hochfesten Klebungen" und bezieht sich auf Metallklebeverbindungen. Gegenüber DIN EN 1464 wurde eine andere Probekörpergeometrie verwendet. Die in DIN EN 1464 beschriebene Rollenschälprüfvorrichtung, welche in eine Zugprüfmaschine eingebaut wird, wurde aufgrund der Probekörperabmessungen in Ihrer Rollenlänge leicht modifiziert, um den Probekörper zu positionieren.

Um während der Abschälung bei hoher Verbundfestigkeit den Einfluß der Biegung der Hartkomponente gering zu halten, wurde diese mit einer Wanddicke von 3 mm ausgelegt. Die Wanddicke der Weichkomponente beträgt 2 mm, ein oftmals praxisübliches Maß für flächige Überspritzungen, damit eine relativ hohe Kontakttemperatur beim Überspritzen der Hartkomponente gewährleistet wird. Die Abschälung der Weichkomponente erfolgt in Anlehnung an DIN EN 1464 in einem Winkel von 90° zur Verbundfläche.

Die Kenngröße für die Verbundfestigkeit aus der 90°-Rollenschälprüfung wird als Schälwiderstand in der Einheit [N/mm] angegeben:

$$\text{Schälwiderstand [N/mm]} = \frac{\text{Schälkraft [N]}}{\text{Probenbreite [mm]}}$$

Die Auswertesoftware der Zugprüfmaschine berechnet die Werte der minimalen Schälkraft $F_{min}$, maximalen Schälkraft $F_{max}$ und mittleren Schälkraft $F_{mittel}$.

Die mittlere Schälkraft wird als Maß für die Beurteilung der Verbundfestigkeit herangezogen.

Der mittlere Schälwiderstand wird errechnet, indem der Wert der mittleren Schälkraft durch die Probenbreite 35mm dividiert wird.

Der Druckverformungsrestwert der Elastomer-Komponente wurde nach der DIN ISO 815 bei 70 und 100°C bestimmt. Verwendet wurden Probekörper vom Typ B mit 13 +/-0,5 mm Durchmesser und 6,3 +/-0,3 mm Dicke.

Tabelle 2: Druckverformungsrestwerte (DVR) nach DIN ISO 815 und Haftungsuntersuchungen mit Polyacetal

| PTS-THERMOPRENE | DVR 70°C/24h [%] | DVR 100°C/24h [%] | HOSTAFORM C9021 | | HOSTAFORM S9064 | | HOSTAFORM S9244 | |
|---|---|---|---|---|---|---|---|---|
| | | | Schälwiderstand [N/mm] | Hafffaktor | Schälwiderstand [N/mm] | Hafffaktor | Schälwiderstand [N/mm] | Hafffaktor |
| PTS-TP-85A10*9007 | 45 | 58 | 1,9 | 5 | 2,3 | 4 | 1,7 | 5 |
| PTS-TP-75A10*9007 | 44 | 56 | 2,2 | 5 | 2,4 | 5 | 2,3 | 5 |
| PTS-TP-70A10*9000 | 40 | 50 | 2,1 | 4 | 1,8 | 5 | 2,1 | 5 |
| PTS-TP-60A10*9000 | 53 | 58 | 2,5 | 5 | 2,4 | 4 | 2,5 | 5 |
| PTS-TP-55A10*9000 | 41 | 78 | 0,9 | 2 | 0,9 | 2 | 1,3 | 4 |
| PTS-TP-40A10*9007 | 59 | 71 | 1,4 | 3 | 0,7 | 2 | 1,3 | 3 |
| PTS-TP-65A22*807 | 60 | 80 | 0,8 | 2 | 1,8 | 3 | 0,5 | 2 |
| PTS-TP-65A60*807 | 64 | 86 | 0,4 | 2 | 1,2 | 3 | 1,1 | 2 |
| PTS-TP-75A20*9000 | 61 | 71 | 0,7 | 2 | 1,3 | 3 | 1,1 | 2 |
| PTS-TP-75A66*800 | 44 | 59 | 0,3 | 2 | 0,9 | 2 | 0,5 | 2 |
| PTS-UNIPRENE-7100-55*9000 | 29 | 33 | 0,0 | 1 | 0,0 | 1 | 0,0 | 1 |
| PTS-THERMOFLEX S3005/121*9007 | 73 | 82 | 4,5 | 5 | 5,2 | 5 | 5,4 | 5 |

Definition des Materialverbundes/Haftfaktor

| keine Verbindung | keine Haftung , keine Entformung als Verbundteil | 1 |
|---|---|---|
| Adhäsion | leichtes Anhaften, Weichkomponente bleibt nicht an Hartkomponente kleben | 2 |
| Adhäsion-Kohäsion | gutes Anhaften, Weichkomponente geht lückenhaft feste Verbindung (Kohäsion) mit Hartkomponente ein | 3 |
| Kohäsion | sehr gute Haftung, Weichkomponente geht vollflächige feste Verbindung mit Hartkomponente ein, Bruch der Schälung innerhalb der Weichkomponente | 4 |
| Kohäsion > Materialfestigkeit (K>MF) | Verbundfestigkeit ist höher als Materialfestigkeit; unlösbare Verbindung, keine Schälung mehr möglich, Weichkomponente reißt ab vor Schälbeginn, | 5 |

Generell kann der Schälwiderstand nicht alleine für die Beurteilung der Haftung herangezogen werden. Das "Bruchbild" ist ebenso wichtig.

Besonders bei weicheren TPV-Typen, bzw. bei Typen mit geringerer Reissfestigkeit, ist der Schälwiderstand somit auch geringer als bei härteren TPV-Typen (mit in der Regel höheren Reissfestigkeiten). In der Untersuchung sind TPV-Werkstoffe enthalten, welche niedrige Reißfestigkeiten besitzen und deswegen niedrige "Schälkräfte" erreichen. Diese "Schälkräfte" sind oftmals keine Schälkräfte, sondern Reißkräfte. Derartige Fälle sind dann mit Haftfaktor 5 gekennzeichnet. Tabelle 2 zeigt die Ergebnisse für den Schälwiderstand und den Haftfaktor für die angegebenen Beispiele. Generell wird eine gute bis sehr gute Verbundfestigkeit mit den erfindungsgemäßen Werkstoffen an allen getesteten Polyacetal Typen erzielt.

In vielen Fällen wird Kohäsionsbruch erreicht bzw. ist die Verbundfestigkeit höher als die Materialfestigkeit der TPV-Weichkomponente. Hinzu kommen die vorher genannten Eigenschaften, wie niedrigerer Druckverformungsrest und verbesserte Chemikalienbeständigkeit gegenüber Fetten und Ölen, die die bekannten Verbundkörper mit SEBS gemäß dem Stand der Technik (Vergleichsbeispiel PTS-THERMOFLEX) nicht aufweisen. Somit eröffnen sich mit dieser erfindungsgemäßen Werkstoffgruppe neue Anwendungsfelder u.a. im Automobilmotorraum.

**Patentansprüche**

1. Verbundkörper enthaltend mindestens ein Polyacetal und mindestens ein modifiziertes thermoplastisches Vulkanisat (TPV), die adhäsiv oder kohäsiv miteinander verbunden sind, gebildet durch ein Polyacetal-Formteil, das teilweise oder vollständig mit dem modifizierten TPV-Elastomer beschichtet ist oder an das ein oder mehrere Formteile aus dem modifizierten TPV direkt angeformt sind, wobei das modifizierte TPV-Elastomer ein Compound mit einer Härte von 30 bis 90 Shore A ist, enthaltend die Komponenten:

   a) 2-75 Gew.-% eines ganz oder teilweise vernetzten Ethylen-Propylen-Dien-Kautschuks (EPDM) in 1-50 Gew.-% einer polyolefinischen Matrix bei Zusatz von 0,05-10 Gew.-% Stabilisatoren und/oder Vernetzungshilfen,
   b) 1-30 Gew.-% mindestens eines Verträglichkeitsvermittlers und
   c) 10-70 Gew.-% eines nicht olefinischen Thermoplastmaterials ausgewählt aus der Gruppe bestehend aus thermoplastische Polyesterurethan-Elastomere, thermoplastische Polyetherurethan-Elastomere, thermoplastische Polyester, thermoplastische Polyesterester-Elastomere, thermoplastische Polyetherester-Elastomere, thermoplastische Polyetheramid-Elastomere, thermoplastische Polyamide, thermoplastische Polycarbonate, thermoplastische Polyacrylate, Acrylatkautschuke und Styrol-Acrylnitril/Acrylatkautschuke (ASA); und wobei die Gew.-% -Angaben auf das Gesamtgewicht des TPV-Elastomeren bezogen sind.

2. Verbundkörper nach Anspruch 1, **dadurch gekennzeichnet, dass** als Polyacetal ein Polyoxymethylen-Copolymer verwendet wird.

3. Verbundkörper nach einem der Ansprüche 1 oder 2, **dadurch gekennzeichnet, dass** das modifizierte TPV-Elastomer zusätzlich bis zu 50 Gew-% Weichmacheröl und/oder bis zu 50 Gew.-% organische und/oder anorganische Füllstoffe bzw. Verstärkungsstoffe enthält.

4.  Verbundkörper nach einem der Ansprüche 1 bis 3, **dadurch gekennzeichnet, dass** die Matrix für den EPDM-Kautschuk Polypropylen ist.

5.  Verbundkörper nach einem der Ansprüche 1 - 4, **dadurch gekennzeichnet, dass** als Verträglichkeitsvermittler b) funktionalisiertes Styrol-Olefin-Blockcopolymer, Methacrylat-Butadien-Styrol (MBS) , MABS (Methyl-Methacrylat-Acrylnitril-Butadien-Styrol), funktionalisiertes EPDM bzw. Ethylen-Propylen-Kautschuk (EPM) und/oder funktionalisierte Polyolefine eingesetzt werden.

6.  Verbundkörper nach einem der Ansprüche 1 - 5 in Form eines Formteils aus Polyacetal, welches ganz oder teilweise mit dem modifizierten TPV-Elastomer beschichtet ist.

7.  Verbundkörper nach einem der Ansprüche 1 bis 6, in Form eines Formteils aus Polyacetal, an welches mindestens ein weiteres Formteil aus dem modifizierten TPV-Elastomer angeformt ist.

8.  Verbundkörper nach einem der Ansprüche 1 bis 7, **dadurch gekennzeichnet, dass** dieser im Mehrkomponentenspritzgußverfahren hergestellt wurde.

9.  Verbundkörper nach Anspruch 8, **dadurch gekennzeichnet, dass** erst ein Formteil aus Polyacetal geformt wird und danach eine Beschichtung oder ein Formteil aus dem modifizierten TPV-Elastomer auf das Polyacetal-Formteil gespritzt wird.

10. Verbundkörper nach Anspruch 9, **dadurch gekennzeichnet, dass** zuerst ein Formteil aus dem modifizierten TPV-Elastomeren vorgespritzt wird und dann eine Beschichtung aus dem Polyacetal aufgespritzt oder mindestens ein Formteil aus dem Polyacetal angespritzt wird.

11. Verfahren zur Herstellung eines Verbundkörpers aus Polyacetal und mindestens einem modifizierten TPV-Elastomer gemäß einem der Ansprüche 1 bis 10, wobei erst ein Formteil aus Polyacetal geformt wird, an das anschließend eine Beschichtung oder mindestens ein Formteil aus dem modifizierten TPV angespritzt wird, und somit das Polyacetal adhäsiv oder kohäsiv mit dem modifizierten TPV verbunden wird.

12. Verfahren zur Herstellung eines Verbundkörpers aus Polyacetal und mindestens einem modifizierten TPV-Elastomer gemäß einem der Ansprüche 1 bis 10, wobei erst ein Formteil aus dem modifizierten TPV geformt wird, an das anschließend eine Beschichtung oder mindestens ein Formteil aus Polyacetal angespritzt wird, und somit das Polyacetal adhäsiv oder kohäsiv mit dem modifizierten TPV verbunden wird.

13. Verfahren nach Anspruch 12, **dadurch gekennzeichnet, dass** es im Mehrkomponentenspritzgußverfahren in einem Werkzeug durchgeführt wird, wobei das Formteil aus Polyacetal vor dem Anspritzen des modifizierten TPV-Elastomer auf eine Temperatur im Bereich von 80°C bis knapp unter seinen Schmelzpunkt vorgewärmt ist, das modifizierte TPV beim Anspritzen an das Formteil aus Polyacetal eine Massetemperatur von 170 bis 270°C aufweist und das Werkzeug auf eine Temperatur im Bereich von 20 bis 140°C temperiert ist.

14. Verfahren nach Anspruch 13, **dadurch gekennzeichnet, dass** es im Mehrkomponentenspritzgußverfahren in einem Werkzeug durchgeführt wird, wobei das Formteil aus dem modifizierten TPV vor dem Anspritzen des Polyacetals auf eine Temperatur im Bereich von 20-80°C vorgewärmt ist, das Polyacetal beim Anspritzen an das Formteil aus dem modifizierten TPV eine Massetemperatur von 170 bis 270°C aufweist und das Werkzeug auf eine Temperatur im Bereich von 20 bis 140°C temperiert ist.

15. Verwendung des Verbundkörpers nach einem der Ansprüche 1-10 als Funktionsteil mit integrierten Dichtungs- und Dämpfungseigenschaften.

16. Verwendung des Verbundkörpers nach einem der Ansprüche 1-10 als Funktionsteil im Automobilmotorraum.

17. Verwendung von TPV-Elastomeren enthaltend die Komponenten:

   a) 2-75 Gew.-% eines ganz oder teilweise vernetzten Ethylen-Propylen-Dien-Kautschuks (EPDM) in 1-50 Gew.-% einer polyolefinischen Matrix bei Zusatz von 0,05-10 Gew.-% Stabilisatoren und/oder Vernetzungshilfen, und

b) 1-30 Gew.-% mindestens eines Verträglichkeitsvermittlers und
c) 10-70 Gew.-% eines nicht olefinischen Thermoplastmaterials,
wobei die Gew.-% -Angaben auf das Gesamtgewicht des TPV-Elastomeren bezogen sind,

zur Herstellung eines Verbundkörpers gemäß einem der Anprüche 1 bis 10.

**Claims**

1. A composite body containing at least one polyacetal and at least one modified thermoplastic vulcanizate (TPV), which are adhesively or cohesively bonded to each other, formed by a polyacetal molded part which is partly or completely coated with the modified TPV elastomer, or to which one or more molded parts of the modified TPV elastomer are directly integrally molded, wherein the modified TPV elastomer is a compound having a hardness of 30 to 90 Shore A, containing the components:

   a) 2 to 75 % by weight of a completely or partly cross-linked ethylene propylene diene rubber (EPDM) in 1 to 50 % by weight of a polyolefinic matrix with addition of 0.05 to 10 % by weight of stabilizers and/or cross-linking auxiliary agents,
   b) 1 to 30 % by weight of at least one compatibility agent, and
   c) 10 to 70 % by weight of a non-olefinic thermoplastic material selected from the group consisting of thermoplastic polyester urethane elastomers, thermoplastic polyether urethane elastomers, thermoplastic polyesters, thermoplastic polyester ester elastomers, thermoplastic polyether ester elastomers, thermoplastic polyether amide elastomers, thermoplastic polyamides, thermoplastic polycarbonates, thermoplastic polyacrylates, acrylate rubbers and styrene acrylonitrile/acrylate rubbers (ASA); and
   wherein the % by weight indications relate to the total weight of the TPV elastomer.

2. The composite body according to claim 1, **characterized in that** a polyoxymethylene copolymer is used as the polyacetal.

3. The composite body according to claim 1 or 2, **characterized in that** the modified TPV elastomer in addition contains up to 50 % by weight of a plasticizer oil and/or up to 50 % by weight of organic and/or inorganic fillers or reinforcing substances.

4. The composite body according to any one of claims 1 to 3, **characterized in that** the matrix for the EPDM rubber is polypropylene.

5. The composite body according to any one of claims 1 to 4, **characterized in that** as the compatibility agent b), a functionalized styrene-olefin block copolymer, methacrylate-butadiene-styrene (MBS), MABS (methyl-methacrylate-acrylonitrile-butadiene-styrene), functionalized EDPM or ethylene-propylene rubber (EPM) and/or functionalized polyolefins are employed.

6. The composite body according to any one of claims 1 to 5 in the form of a molded part of polyacetal which is completely or partly coated with the modified TPV elastomer.

7. The composite body according to any one of claims 1 to 6 in the form of a molded part of polyacetal, to which at least one further molded part of the modified TPV elastomer is integrally molded.

8. The composite body according to any one of claims 1 to 7, **characterized in that** the same was manufactured in a multi-component injection molding process.

9. The composite body according to claim 8, **characterized in that** a molded part of polyacetal is firstly molded, and thereafter a coating or a molded part of the TPV elastomer is applied to the polyacetal molded part by injection molding.

10. The composite body according to claim 9, **characterized in that** a molded part of the modified TPV elastomers is firstly pre-injected, and thereafter a coating of the polyacetal is applied by injection molding or at least one molded part is added by injection molding.

11. A method for producing a composite body of polyacetal and at least one modified TPV elastomer according to any one of claims 1 to 10, wherein a molded part of polyacetal is firstly molded, to which a coating or at least one molded part of the modified TPV is subsequently added by injection molding, and thus the polyacetal is adhesively or cohesively bonded to the modified TPV.

12. The method for producing a composite body of polyacetal and at least one modified TPV elastomer according to any one of claims 1 to 10, wherein a molded part of the TPV elastomer is firstly molded to which a coating or at least one molded part of polyacetal is subsequently added by injection molding, and thus the polyacetal is adhesively or cohesively bonded to the modified TPV.

13. The method according to claim 12, **characterized in that** it is performed in a multi-component injection process in a tool, wherein the molded part of polyacetal, prior to adding the modified TPV elastomer by injection molding, is preheated to a temperature in the range of 80°C up to slightly below its melting point, the modified TPV has a material temperature of 170 to 270°C when being added to the molded part of polyacetal by injection molding, and the tool is tempered to a temperature in the range of 20 to 140°C.

14. The method according to claim 13, **characterized in that** it is performed in a multi-component injection process in a tool, wherein the molded part of the modified TPV, prior to adding the polyacetal by injection molding, is preheated to a temperature in the range of 20 to 80°C, the polyacetal has a material temperature of 170 to 270°C when being added to the molded part of the modified TPV by injection molding, and the tool is tempered to a temperature in the range of 20 to 140°C.

15. Use of a composite body according to any one of claims 1 to 10 as a functional part having integrated sealing and damping properties.

16. Use of a composite body according to any one of claims 1 to 10 as a functional part in the engine compartment of a motor vehicle.

17. The use of TPV elastomers containing the components:

a) 2 to 75 % by weight of a completely or partly cross-linked ethylene propylene diene rubber (EPDM) in 1 to 50 % by weight of a polyolefinic matrix with addition of 0.05 to 10 % by weight of stabilizers and/or cross-linking auxiliary agents, and
b) 1 to 30 % by weight of at least one compatibility agent, and
c) 10 to 70 % by weight of a non-oleofinic thermoplastic material,
wherein the % by weight indications relate to the total weight of the TPV elastomer,

for producing a composite body according to any one of claims 1 to 10.

**Revendications**

1. Corps composite comprenant au moins un polyacétal et au moins un vulcanisat thermoplastique (TPV) modifié, lesquels sont reliés entre eux de manière adhésive ou cohésive, formé par une pièce moulée en polyacétal qui est partiellement ou complètement revêtue avec l'élastomère TPV modifié ou sur laquelle une ou plusieurs pièces moulées constituées du TPV modifié sont directement moulées, sachant que l'élastomère TPV modifié est un composé d'une dureté allant de 30 à 90 Shore A, contenant les composants :

a) 2 à 75 % en poids d'un caoutchouc d'éthylène-propylène-diène (EPDM) complètement ou partiellement réticulé dans 1 à 50 % en poids d'une matrice polyoléfinique avec ajout de 0,05 à 10 % en poids de stabilisants et/ou d'agents de réticulation,
b) 1 à 30 % en poids d'au moins un médiateur de compatibilité et
c) 10 à 70 % en poids d'une matière thermoplastique non oléfinique sélectionnée dans le groupe constitué par des élastomères thermoplastiques de polyesteruréthane, des élastomères thermoplastiques de polyétheruréthane, des polyesters thermoplastiques, des élastomères thermoplastiques de polyesterester, des élastomères thermoplastiques de polyétherester, des élastomères thermoplastiques de polyétheramide, des polyamides thermoplastiques, des polycarbonates thermoplastiques, des polyacrylates thermoplastiques, des caoutchoucs d'acrylate et des caoutchoucs d'acrylnitrile/d'acrylate styrénique (ASA) ; et
sachant que les indications en % de poids se rapportent au poids total de l'élastomère TPV.

**2.** Corps composite selon la revendication 1, **caractérisé en ce qu'**un copolymère de polyoxyméthylène est utilisé comme polyacétal.

**3.** Corps composite selon l'une des revendications 1 ou 2, **caractérisé en ce que** l'élastomère TPV modifié contient en outre jusqu'à 50 % en poids d'huile d'adoucissement et/ou jusqu'à 50 % en poids de matières de remplissage ou matières de renforcement organiques et/ou anorganiques.

**4.** Corps composite selon l'une des revendications 1 à 3, **caractérisé en ce que** la matrice pour le caoutchouc d'EPDM est du polypropylène.

**5.** Corps composite selon l'une des revendications 1 à 4, **caractérisé en ce que**, comme médiateur de compatibilité b), on utilise un copolymère bloc oléfinique styrénique fonctionnalisé, du méthacrylate-butadiène-styrène (MBS), du MABS (méthyle-méthacrylate-acrylonitrile-butadiène-styrène), du caoutchouc d'EPDM ou d'éthylène-propylène (EPM) fonctionnalisé et/ou des polyoléfines fonctionnalisées.

**6.** Corps composite selon l'une des revendications 1 à 5, sous forme d'une pièce moulée en polyacétal, laquelle est complètement ou partiellement revêtue avec l'élastomère TPV modifié.

**7.** Corps composite selon l'une des revendications 1 à 6, sous forme d'une pièce moulée en polyacétal, sur laquelle au moins une pièce moulée supplémentaire composée de l'élastomère TPV modifié est moulée.

**8.** Corps composite selon l'une des revendications 1 à 7, **caractérisé en ce que** celui-ci a été fabriqué par procédé de moulage par injection multi-composant.

**9.** Corps composite selon la revendication 8, **caractérisé en ce qu'**une pièce moulée en polyacétal est d'abord formée et qu'un revêtement ou une pièce moulée composé(e) de l'élastomère TPV modifié est ensuite injecté(e) sur la pièce moulée en polyacétal.

**10.** Corps composite selon la revendication 9, **caractérisé en ce qu'**une pièce moulée composée de l'élastomère TPV modifié est d'abord préinjectée et qu'ensuite un revêtement composé du polyacétal est injecté sur celle-ci ou qu'au moins une pièce moulée composée du polyacétal est apposée par injection.

**11.** Procédé de fabrication d'un corps composite composé de polyacétal et d'au moins un élastomère TPV modifié selon l'une des revendications 1 à 10, dans lequel une pièce moulée en polyacétal est d'abord formée, sur laquelle un revêtement ou au moins une pièce moulée composé(e) de l'élastomère TPV modifié est ensuite injecté(e), et le polyacétal est ainsi relié de manière adhésive ou cohésive au TPV modifié.

**12.** Procédé de fabrication d'un corps composite composé de polyacétal et d'au moins un élastomère TPV modifié selon l'une des revendications 1 à 10, dans lequel une pièce moulée composée du TPV modifié est d'abord formée, sur laquelle un revêtement ou au moins une pièce moulée en polyacétal est ensuite injecté(e), et le polyacétal est ainsi relié de manière adhésive ou cohésive au TPV modifié.

**13.** Procédé selon la revendication 12, **caractérisé en ce qu'**il est effectué dans un outil par procédé de moulage par injection multi-composant, sachant que la pièce moulée en polyacétal est préchauffée avant l'injection de l'élastomère TPV modifié à une température comprise dans la plage de 80°C à juste en-dessous de son point de fusion, le TPV modifié présente une température massique de 170 à 270°C lors de l'injection sur la pièce moulée en polyacétal et l'outil est tempéré à une température comprise dans la plage de 20 à 140°C.

**14.** Procédé selon la revendication 13, **caractérisé en ce qu'**il est effectué dans un outil par procédé de moulage par injection multi-composant, sachant que la pièce moulée composée du TPV modifié est préchauffée avant l'injection du polyacétal à une température comprise dans la plage de 20 à 80°C, le polyacétal présente une température massique de 170 à 270°C lors de l'injection sur la pièce moulée composée du TPV modifié et l'outil est tempéré à une température comprise dans la plage de 20 à 140°C.

**15.** Utilisation du corps composite selon l'une des revendications 1 à 10 comme pièce fonctionnelle présentant des propriétés intégrées d'étanchéification et d'atténuation.

**16.** Utilisation du corps composite selon l'une des revendications 1 à 10 comme pièce fonctionnelle dans le compartiment moteur d'une automobile.

17. Utilisation d'élastomères TPV contenant les composants :

a) 2 à 75 % en poids d'un caoutchouc d'éthylène-propylène-diène (EPDM) complètement ou partiellement réticulé dans 1 à 50 % en poids d'une matrice polyoléfinique avec ajout de 0,05 à 10 % en poids de stabilisants et/ou d'agents de réticulation, et
b) 1 à 30 % en poids d'au moins un médiateur de compatibilité et
c) 10 à 70 % en poids d'une matière thermoplastique non oléfinique,
sachant que les indications en % de poids se rapportent au poids total de l'élastomère TPV,

pour la fabrication d'un corps composite selon l'une des revendications 1 à 10.

Fig. 1

Fig. 2

**EP 1 796 900 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4439766 C
- DE 19641904 A
- DE 19845235 C
- EP 0921153 A1
- EP 0837097 A1
- DE 2947490 A
- DE 19845235 C2